# EUROPEAN PATENT SPECIFICATION

(11) **EP 0 337 693 B1**
(45) Date of publication and mention of the grant of the patent: **26.10.1994**
(21) Application number: 89303503.0
(22) Date of filing: 10.04.1989
(51) Int. Cl.: G08B 3/10

(54) **Radio communication apparatus capable of generating an audible tone controlled by a count of reception of a call signal**
Durch Zählung des Empfangs eines Rufsignals gesteuertes Funkübertragungsgerät zum Erzeugen eines hörbaren Tones
Appareil de communication radio capable de produire un son audible commandé par un comptage de réception d'un signal d'appel

(30) Priority: 09.04.1988 JP 86279/88
(43) Date of publication of application: 18.10.1989
(73) Proprietor: NEC CORPORATION, Tokyo (JP)
(72) Inventor: Kudoh, Kazuhiro, Minato-ku Tokyo (JP)
(74) Representative: Abnett, Richard Charles

(56) References cited:
- EP-A- 0 110 506
- GB-A- 2 116 342
- GB-A- 2 118 337
- US-A- 4 412 217
- MOTOROLA TECHNICAL DEVELOPMENTS, vol. 4, no. 1, April 1984, pages 6-8,Schaumburg, Illinois, US; M. SHANLEY et al.: "Audible indication of status chage in pager with memory"

## Description

### Background of the Invention:

This invention relates to a radio communication apparatus for use in receiving a call signal. The radio communication apparatus may be a radio paging receiver, a transceiver, or the like although description will be mainly directed to the radio paging receiver.

A radio paging receiver of the type described includes a receiving circuit for carrying out a receiving operation of selectively receiving a call signal specific to the apparatus. The receiving circuit produces a received signal whenever the receiving circuit receives the call signal. The radio paging receiver further comprises a tone generator for generating an audible tone with a controllable volume.

In order to control the controllable volume, various radio paging receivers are already known. By way of example, a radio paging receiver is disclosed in Japanese Unexamined Utility Model Registration Prepublication No. Syô 55-61,315 (61,315/1980) for Japanese Utility Model Registration Application No. 142,786 of 1978. The radio paging receiver comprises a volume mode switch for producing a volume mode signal indicative of one of some kinds of volume and a control circuit responsive to the received signal for making the tone generator generate the audible tone with the volume indicated by the volume mode signal.

Other similar radio paging receivers are disclosed in United States Patent No. 4,237,448 and in Japanese Utility Model Registration Publication No. Syô 58-43,302 (43,302/1983) for Japanese Utility Model Registration Application No. 157,146 of 1975. Each of these receivers comprises a control circuit for making the tone generator generate the audible tone with the volume which is gradually grown.

Still another radio paging receiver is revealed in Japanese Unexamined Patent Prepublication No. Syô 61-177,035 (177,035/1986) for Japanese Patent Application No. 17,598 of 1985. The radio paging receiver comprises a light emission diode (LED) for emitting visible light and a control circuit responsive to the received signal for making the light emission diode intermittently emit the visible light without generation of the audible tone when the receiver is put into a silent mode.

At any rate, each of such conventional radio paging receivers generates the audible tone with the volume which is either preselected or gradually grown in response to the received signal regardless of urgency or importance. Accordingly, a possessor of the conventional radio paging receiver can not judge the urgency or the importance of the received signal.

### Summary of the Invention:

It is therefore an object of this invention to provide a radio communication apparatus which is capable of generating an audible tone in consideration of urgency or importance of a received signal.

It is another object of this invention to provide a radio communication apparatus of the type described, which is capable of generating an audible tone controlled by a count of reception of a call signal.

Other objects of this invention will become clear as the description proceeds.

A radio communication apparatus to which this invention is applicable includes receiving means for carrying out a receiving operation of selectively receiving a call signal specific to said apparatus. The receiving means produces a received signal whenever the receiving means receives the call signal. According to this invention, the radio communication apparatus comprises counting means connected to the receiving means and given an initial count for counting up the initial count to an increased count one by one in response to the received signal to produce a count signal representative of the increased count, tone generating means for generating an audible tone with a controllable volume, and controlling means connected to the counting means and the tone generating means for controlling the controllable volume in response to the count signal.

### Brief Description of the Drawing:

Fig. 1 is a block diagram of a radio paging receiver according to an embodiment of this invention; and
Figs. 2(a), (b), and (c) collectively show a flow chart for use in describing operation of the radio paging receiver illustrated in Fig. 1.

### Description of the Preferred Embodiment:

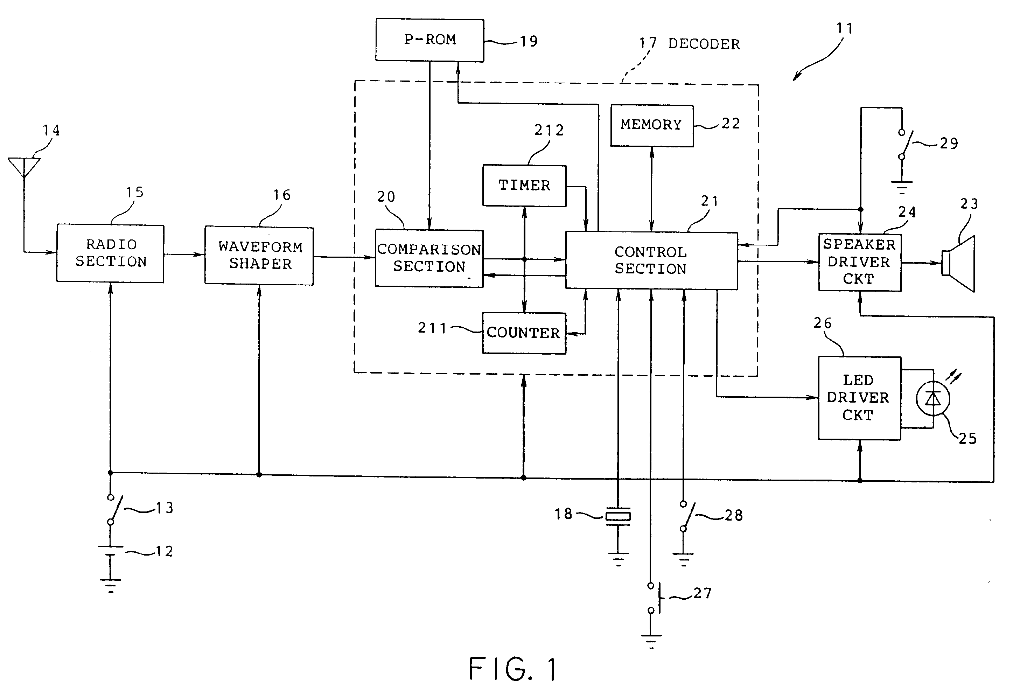

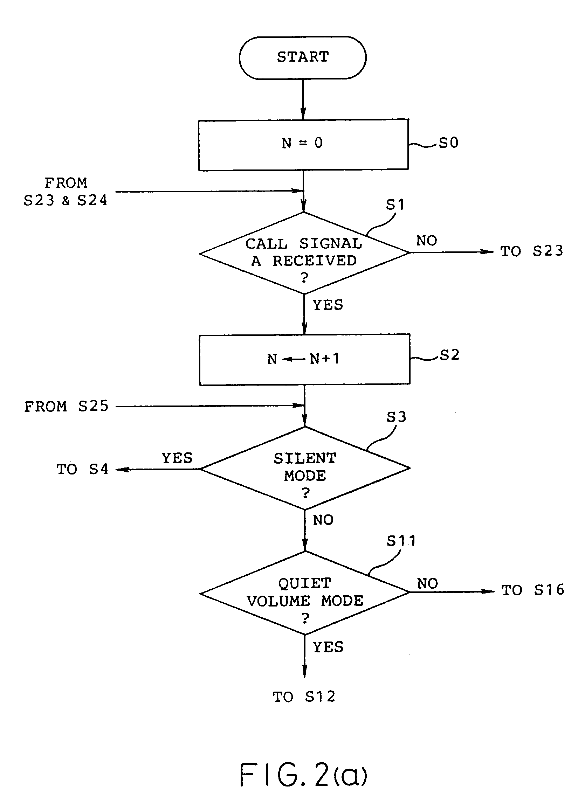

Referring to Fig. 1, a radio paging receiver 11 according to a preferred embodiment of this invention is for receiving a call signal indicative of a call number. The call signal is transmitted as a radio signal from a transmitting station (not shown).

The radio paging receiver 11 is for use in combination with a battery 12 for generating electric power. The radio paging receiver 11 is connected to the battery 12 through a manually operable power source switch 13 and activated by the electric power when the power source switch 13 is closed to an on state.

The radio signal is picked up by an antenna 14 and supplied to a radio section 15. When the radio section 15 is activated by the electric power supplied from the battery 12 through the switch 13, the radio section 15 converts or demodulates the radio signal into a baseband or demodulated signal. The demodulated signal is supplied to a waveform shaper 16. The waveform shaper 16 is also activated by the electric power and shapes a waveform of the demodulated signal into a shaped signal of a digital waveform. The shaped signal is supplied to a decoder 17.

When the decoder 17 is activated by the electric power, the decoder 17 cooperates with a quartz crystal oscillator 18 and a P-ROM (programmable read-only memory) 19 in the manner which will be described as the description proceeds.

The decoder 17 comprises a comparison section 20 for comparing, under the control of a control section 21, the call number indicated by the shaped signal with a directory number specific to the radio paging receiver 11 that is memorized in the P-ROM 19. The comparison section 20 produces a received signal when the call number coincides with the directory number. Thus, the comparison section 20 serves, in combination with the P-ROM 19, as a receiving circuit. The call signal may have not the call number but also a message. In this case, the comparison section 20 has to compare a combination of the call number and the message with a memorized call number which is already memorized in the P-ROM 19.

The control section 21 is put into operation in synchronism with a clock pulse sequence supplied from the quarts crystal oscillator 18. Responsive to the received signal, the control section 21 produces a tone signal and a light signal in the manner which will later be described.

The control section 21 is connected to a counter 211 and a timer 212. The counter 211 is given an initial count of, for example, zero. Responsive to the received signal, the counter 211 counts up the initial count to an increased count one by one to produce a count signal representative of the increased count. Responsive to the received signal, the timer 212 measures a lapsed time after reception of the received signal. If the timer 212 does not receive a reset signal which will become clear as the description proceeds, the timer 212 produces a time out signal when the lapsed time becomes equal to a predetermined time interval of, for example, about twenty seconds. Responsive to the time out signal, the control section 21 stores the received signal in a memory 22 as a confirmation waiting call signal.

A loudspeaker 23 is connected to the control section 21 through a speaker driver circuit 24 of, for example, an amplifier activated by the electric power. Responsive to the tone signal, the loudspeaker 20 generates an audible tone with a controllable volume. That is, the loudspeaker 23 serves, in cooperation with the speaker driver circuit 24, as a tone generator for generating the audible tone with the controllable volume.

A light emission diode (LED) 25 is connected to the control section 21 through an LED driver circuit 26 of, for example, another amplifier activated by the electric power. Responsive to the light signal, the light emission diode 25 intermittently emits visible light. That is, the light emission diode 25 is operable, in combination with the LED driver circuit 26, as a light emitting device for emitting the visible light.

A manually operable reset switch 27 is connected to the control section 21 for producing the reset signal when the reset switch 27 is closed to the on state by a possessor of the radio paging receiver 11. The reset signal will become clear as the description proceeds.

In the embodiment being illustrated, the radio paging receiver 11 is operable in one of a normal mode, a quiet volume mode, and a silent mode in the manner which will later be described.

A silent mode switch 28 is connected to the control section 21 for producing a silent mode signal indicative of silence when the silent mode switch 28 is closed to the on state by the possessor. The silent mode signal will become clear as the description proceeds.

A volume mode switch 29 is connected to the control section 21 and the speaker driver circuit 24 for producing a volume mode signal indicative of one of a normal volume and a quiet volume which is smaller than the normal volume. More specifically, the volume mode switch 29 produces the volume mode signal indicative of the normal volume when the volume mode switch 29 is closed to the on state by the possessor. The volume mode switch 29 produces the volume mode signal indicative of the quiet volume when the volume mode switch 29 is opened to an off state by the possessor.

The radio paging receiver 11 is put into the normal mode in response to the volume mode signal indicative of the normal volume when the silent mode switch 28 is opened to the off state by the possessor. In the normal mode, the speaker driver circuit 24 drives the loudspeaker 23 in response to the tone signal so as to usually generate the audible tone with the normal volume which has a sound pressure level equal to seventy-five decibels when the sound pressure level of the audible tone is measured at a position spaced from the radio paging receiver 11 by thirty centimeters. In the normal mode, the control section 21 may produce the light signal to make the light emitting device intermittently emit the visible light.

The radio paging receiver 11 is put into the quiet volume mode in response to the volume mode signal indicative of the quiet volume when the silent mode switch 28 is opened to the off state by the possessor. In the quiet volume mode, the speaker driver circuit 24 drives the loudspeaker 23 in response to the tone signal so as to ordinarily generate the audible tone with the quiet volume which has a sound pressure level lower than that of the normal volume by twenty decibels. In the quiet volume mode, the control section 21 may produce the light signal to make the light emitting device intermittently emit the visible light.

The radio paging receiver 11 is put into the silent mode in response to the silent mode signal. In the silent mode, the control section 21 generally produces the light signal without production of the tone signal in response to the received signal.

Although the radio paging receiver 11 is put into the silent mode, the control section 21 may produce the tone signal in response to the received signal to make the loudspeaker 23 generate the audible tone in the manner which will later be described. Even though the radio paging receiver 11 is put into the quiet volume mode, the control section 21 may produce the tone signal in response to the received signal to make the loudspeaker 23 generate the audible tone with the normal volume in the manner which will later be described. Furthermore, the control section 21 may produce the tone signal in response to the received signal to make the loudspeaker 23 generate the audible tone with a loud volume which has a sound pressure level higher than that of the normal volume by six decibels in the manner which will later be described.

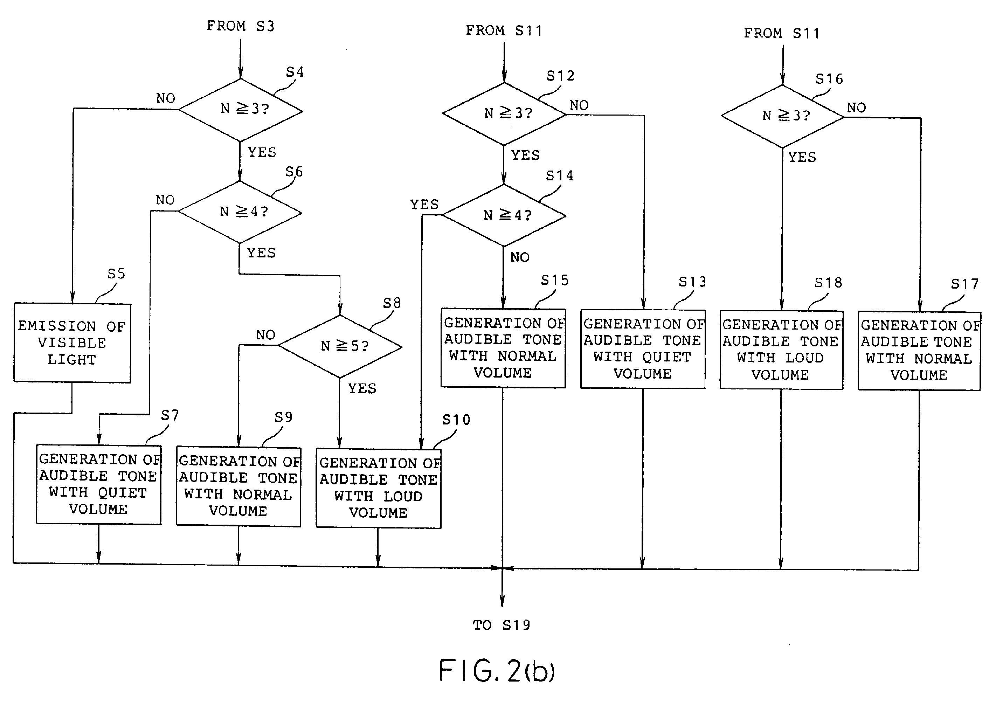

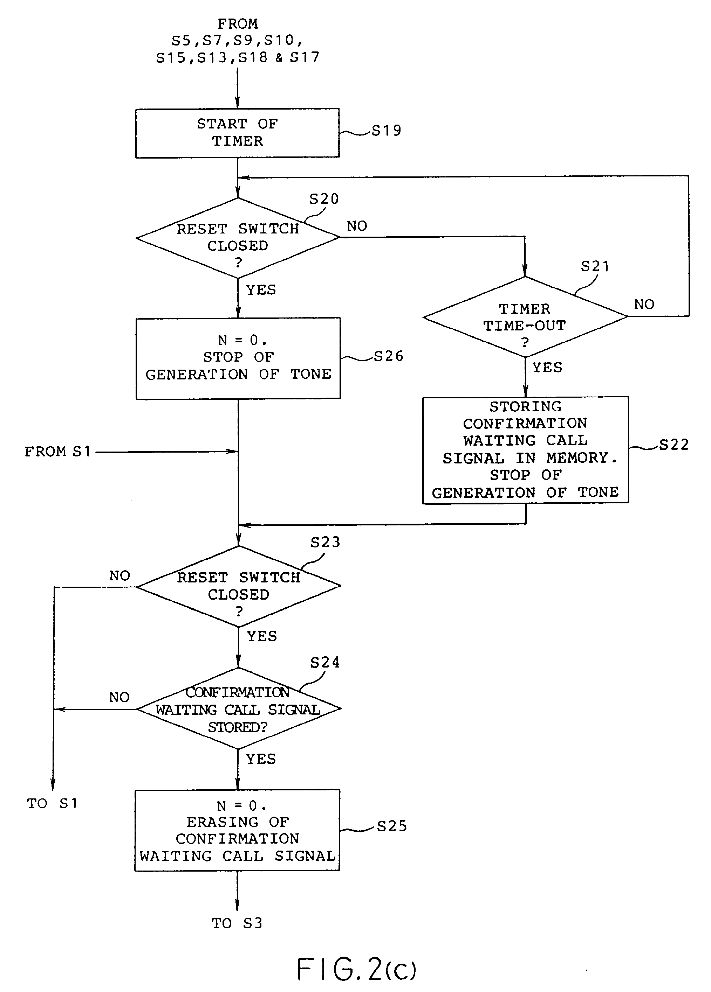

Referring to Figs. 2(a), (b), and (c), description will proceed to operation of the decoder 17. It will be assumed that the radio paging receiver 11 is assigned with a call number A. A call signal of the call number A will be referred to a call signal A.

When the switch 13 is closed to the on state, a count N of the counter 211 is initialized to the initial count of zero at a zeroth stage S0.

When the call signal A is received by the radio paging receiver 11 at a first stage S1, the comparison section 20 produces the received signal in the manner mentioned before. Responsive to the received signal, the counter 211 counts up the count N one by one at a second stage S2.

It will be assumed that the radio paging receiver 11 is put into the silent mode in the manner mentioned before. In this event, the second stage S2 is followed through a third stage S3 by a fourth stage S4 at which the control section 21 judges whether or not the count N is not less than three. When the count N is less than three, the fourth stage S4 is followed by a fifth stage S5 at which the control section 21 produces the light signal to make the light emission diode 25 intermittently emit the visible light while keeping the controllable volume of the audible tone substantially zero. When the count N is equal to three, the fourth stage S4 is followed through a sixth stage S6 by a seventh stage S7 at which the control section 21 produces the tone signal to make the loudspeaker 23 generate the audible tone with the quiet volume. When the count N is equal to four at the sixth stage S6, the fourth stage S4 is followed through the sixth stage S6 and an eighth stage S8 by a ninth stage S9 at which the control section 21 produces the tone signal to make the loudspeaker 23 generate the audible tone with the normal volume. When the count N is not less than five at the eighth stage S8, the fourth stage S4 is followed through the sixth stage S6 and the eighth stage S8 by a tenth stage S10 at which the control section 21 produces the tone signal to make the loudspeaker 23 generate the audible tone with the loud volume.

It will now be assumed that the radio paging receiver 11 is put into the quiet volume mode in the manner mentioned before. In this event, the second stage S2 is followed through the third stage S3 and an eleventh stage S11 by a twelfth stage S12 at which the control section 21 judges whether or not the count N is not less than three. When the count N is less than three, the twelfth stage S12 is followed by a thirteenth stage S13 at which the control section 21 produces the tone signal to make the loudspeaker 23 generate the audible tone with the quiet volume. When the count N is equal to three at a fourteenth stage S14, the twelfth stage S12 is followed through the fourteenth stage S14 by a fifteenth stage S15 at which the control section 21 produces the tone signal to make the loudspeaker 23 generate the audible tone with normal volume. When the count N is not less than four, the twelfth stage S12 is followed through the fourteenth stage S14 by the tenth stage S10 at which the control section 21 produces the tone signal to make the loudspeaker 23 generate the audible tone again with the loud volume.

It will be assumed that the radio paging receiver 11 is put into the normal mode in the manner mentioned before. In this event, the second stage S2 is followed through the third stage S3 and the eleventh stage S11 by a sixteenth stage S16 at which the control section 21 judges whether or not the count N is not less than three. When the count N is less than three, the sixteenth stage S16 is followed by a seventeenth stage S17 at which the control section 21 produces the tone signal to make the loudspeaker 23 generate the audible tone with the normal volume. When the count N is not less than three, the sixteenth stage S16 is followed by an eighteenth stage S18 at which the control section 21 produces the tone signal to make the loudspeaker 23 generate the audible tone with the loud volume.

Responsive to the received signal, the first stage S1 is followed via the second through the eighteenth stages S2 to S18 by a nineteenth stage S19 at which the control section 21 starts the timer 212. The timer 212 produces the time out signal when the predetermined time interval lapses after reception of the received signal as mentioned before. The predetermined time interval may be about twenty seconds long. The nineteenth stage S19 proceeds to a twentieth stage S20.

At the twentieth stage S20, the control section 21 judges whether or not the reset signal is produced by the reset switch 27. As mentioned above, the reset signal is produced when the reset switch 27 is closed to the on state by the possessor of the radio paging receiver 11. In other words, judgement is carried out at the twentieth stage S20 whether or not the reset switch 27 is closed. When the reset signal is not produced by the reset switch 27, the twentieth stage S20 proceeds to a twenty-first stage S21 at which the control section 21 carries out judgement whether or not the time out signal is produced. When the judgement indicates a negative result, operation returns to the twentieth stage S20. When the judgement indicates an affirmative result, the twenty-first stage S21 is succeeded by a twenty-second stage S22 at which the control section 21 stores the received signal in the memory 22 as the confirmation waiting call signal as mentioned before. Simultaneously, the control section 21 makes the tone generator stop generation of the audible tone.

The twenty-second stage S22 proceeds to a twenty-third stage S23 at which the control section 21 judges whether or not the reset signal is produced by the reset switch 27. When the reset signal is not produced by the reset switch 27, the twenty-third stage S23 returns back to the first stage S1. When the reset signal is produced by the reset switch 27, the twenty-third stage S23 is succeeded by a twenty-fourth stage S24 at which the control section 21 judges whether or not the confirmation waiting call signal is stored in the memory 22. When the uncalled signal is not stored in the memory 22, the twenty-fourth stage S24 returns back to the first stage S1. When the uncalled signal is stored in the memory 22, the twenty-fourth stage S24 proceeds to a twenty-fifth stage S25.

At the twenty-fifth stage S25, the control section 21 initializes the count N in the counter 211 to zero. Thus, the control section 21 acts as an initializing arrangement in the manner indicated at the twenty-fifth stage S25. It will be understood that the initializing arrangement is connected to the reset switch 27 and the counter 211 and initializes the count N in the counter 211 to the initial count in response to the reset signal. Simultaneously, the control section 21 erases the uncalled signal out of the memory 22. The twenty-fifth stage S25 returns back to the third stage S3.

The twentieth stage S20 is succeeded by a twenty-sixth stage S26 when the reset signal is produced. At the twenty-sixth stage S26, the control section 21 initializes the count N in the counter 211 to zero. Thus, the control section 21 serves as the initializing arrangement even at the twenty-sixth stage S26. Simultaneously, the control section 21 makes the tone generator stop generation of the audible tone. The twenty-sixth stage S26 shifts to the twenty-third stage S23.

The decoder 17 which operates in the above-mentioned manner can be readily realized by a microprocessor.

While this invention has thus far been described in conjunction with a preferred embodiment thereof, it will readily be possible for those skilled in the art to put this invention into practice in various other manners. For example, a radio paging receiver may be assigned with a plurality of call numbers. In addition, this invention is applicable to a radio paging receiver comprising a visual display unit for displaying messages carried by a message signal which succeeds a call signal.

## Claims

1. A radio communication apparatus which includes receiving means for carrying out a receiving operation of selectively receiving a call signal specific to said apparatus, said receiving means producing a received signal whenever said receiving means receives said call signal, wherein the improvement comprises:
counting means connected to said receiving means and given an initial count for counting up said initial count to an increased count one by one in response to said received signal to produce a count signal representative of said increased count;
tone generating means for generating an audible tone with a controllable volume; and
controlling means connected to said counting means and said tone generating means for controlling said controllable volume in response to said count signal.

2. A radio communication apparatus as claimed in Claim 1, further comprising a reset switch connected to said controlling means for producing a reset signal, wherein said controlling means is responsive to said reset signal to make said tone generating means stop generation of said audible tone.

3. A radio communication apparatus as claimed in Claim 2, wherein said apparatus further comprises initializing means connected to said reset switch and said counting means for initializing the increased count in said counting means to said initial count in response to said reset signal.

4. A radio communication apparatus as claimed in Claim 1, wherein said controlling means is responsive to said received signal to make said tone generating means generate said audible tone with a normal volume when said increased count is less than a first predetermined count, said controlling means being responsive to said received signal to make said tone generating means generate said audible tone with a loud volume greater than said normal volume when said increased count is not less than said first predetermined count.

5. A radio communication apparatus as claimed in Claim 1, comprising a volume mode switch connected to said controlling means for producing a volume mode signal indicative of one of a normal volume and a quiet volume smaller than said normal volume, wherein said controlling means is responsive to said received signal and to the volume mode signal indicative of said quiet volume to make said tone generating means generate the audible tone with said quiet volume if said increased count is less than a first predetermined count, said controlling means being responsive to said received signal and to the volume mode signal indicative of said quiet volume to make said tone generating means generate the audible tone with said normal volume if said increased count is not less than said first predetermined count and is less than a second predetermined count greater than said first predetermined count.

6. A radio communication apparatus as claimed in Claim 5, wherein said controlling means is responsive to said received signal and to the volume mode signal indicative of said quiet volume to make said tone generating means generate the audible tone with a loud volume greater than said normal volume if said increased count is not less than said second predetermined count.

7. A radio communication apparatus as claimed in Claim 1, further comprising light emitting means connected to said controlling means for emitting visible light and a silent mode switch connected to said controlling means for producing a silent mode signal indicative of silence, wherein said controlling means is responsive to said received signal and to said silent mode signal to make said light emitting means emit said visible light while keeping the controllable volume of said audible tone substantially zero if said increased count is less than a first predetermined count.

8. A radio communication apparatus as claimed in Claim 7, wherein said controlling means is responsive to said received signal and to said silent mode signal to make said tone generating means generate the audible tone with a quiet volume if said increased count is not less than said first predetermined count and is less than a second predetermined count greater than said first predetermined count, said controlling means being responsive to said received signal and to said silent mode signal to make said tone generating means generate the audible tone with a normal volume greater than said quiet volume if said increased count is not less than said second predetermined count and is less than a third predetermined count greater than said second predetermined count.

9. A radio communication apparatus as claimed in Claim 8, wherein said controlling means is responsive to said received signal and to said silent mode signal to make said tone generating means generate the audible tone with a loud volume greater than said normal volume if said increased count is not less than said third predetermined count.

## Patentansprüche

1. Funkübertragungsgerät mit einer Empfangseinrichtung zum Durchführen eines Empfangsbetriebs des wahlweisen Empfangens eines für das Gerät spezifischen Rufsignals, wobei die Empfangseinrichtung immer dann ein Empfangssignal erzeugt, wenn die Empfangseinrichtung ein Rufsignal empfängt, wobei die Verbesserung aufweist:
eine mit der Empfangseinrichtung verbundene Zähleinrichtung, der ein Anfangszählwert zugeordnet wird zum Aufwärtszählen von dem Anfangszählwert zu einem erhöhten Zählwert jeweils einzeln in Abhängigkeit von dem empfangenen Signal, so daß ein dem erhöhten Zählwert entsprechendes Zählsignal erzeugt wird;
eine Tonerzeugungseinrichtung zum Erzeugen eines hörbaren Tons mit einer regelbaren Lautstärke, und
einer mit der Zähleinrichtung und der Tonerzeugungseinrichtung verbundene Regeleinrichtung zum Regeln der regelbaren Lautstärke in Abhängigkeit von dem Zählsignal.

2. Funkübertragungsgerät nach Anspruch 1, ferner mit einem mit der Regeleinrichtung verbundenen Rücksetzschalter zum Erzeugen eines Rücksetzsignals, wobei die Regeleinrichtung als Antwort auf das Rücksetzsignal die Tonerzeugungseinrichtung veranlaßt, die Erzeugung des hörbaren Tons zu stoppen.

3. Funkübertragungsgerät nach Anspruch 2, wobei das Gerät ferner aufweist eine mit dem Rücksetzschalter und der Zähleinrichtung verbundene Intialisierungseinrichtung zum Initialisieren des erhöhten Zählwerts in der Zähleinrichtung auf den Anfangszählwert in Abhängigkeit von dem Rücksetzsignal.

4. Funkübertragungsgerät nach Anspruch 1, wobei die Regeleinrichtung als Antwort auf das empfangene Signal die Tonerzeugungseinrichtung veranlaßt, den hörbaren Ton mit einer normalen Lautstärke zu erzeugen, wenn der erhöhte Zählwert kleiner als ein erster bestimmter Zählwert ist, die Regeleinrichtung als Antwort auf das empfangene Signal die Tonerzeugungseinrichtung veranlaßt, den hörbaren Ton mit einer Lautstärke zu erzeugen, die höher ist als die normale Lautstärke, wenn der erhöhte Zählwert nicht kleiner als der erste bestimmte Zählwert ist.

5. Funkübertragungsgerät nach Anspruch 1, mit einem mit der Regeleinrichtung verbundenen Lautstärkebetriebsschalter zum Erzeugen eines Lautstärkebetriebssignals, das eine normale Lautstärke oder eine kleine Lautstärke angibt, die geringer als die normale Lautstärke ist, wobei die Regeleinrichtung als Antwort auf das empfangene Signal und das Lautstärkebetriebssignal, das eine kleine Lautstärke angibt, die Tonerzeugungseinrichtung veranlaßt, den hörbaren Ton mit einer kleinen Lautstärke zu erzeugen, wenn der erhöhte Zählwert kleiner als ein erster bestimmter Zählwert ist, die Regeleinrichtung als Antwort auf das empfangene Signal und das Lautstärkebetriebssignal, das die kleine Lautstärke anzeigt, die Tonerzeugungseinrichtung veranlaßt, den hörbaren Ton mit einer normalen Lautstärke zu erzeugen, wenn der erhöhte Zählwert nicht kleiner als der erste bestimmte Zählwert ist und kleiner als ein zweiter bestimmter Zählwert ist, der größer als der erste bestimmte Zählwert ist.

6. Funkübertragungsgerät nach Anspruch 5, wobei die Regeleinrichtung als Antwort auf das empfangene Signal und das Lautstärkebetriebssignal, das die kleine Lautstärke anzeigt, die Tonerzeugungseinrichtung veranlaßt, den hörbaren Ton mit einer Lautstärke zu erzeugen, die größer als die normale Lautstärke ist, wenn der erhöhte Zählwert nicht kleiner als der zweite bestimmte Zählwert ist.

7. Funkübertragungsgerät nach Anspruch 1, ferner mit einer mit der Regeleinrichtung verbundenen lichtabstrahlenden Einrichtung zum Abstrahlen von sichtbarem Licht und einem mit der Regeleinrichtung verbundenen Stillbetriebschalter zum Erzeugen eines Stillbetriebsignals, das Stille anzeigt, wobei die Regeleinrichtung als Antwort auf das empfangene Signal und das Stillbetriebssignal die lichtabgebende Einrichtung veranlaßt, das sichtbare Licht abzustrahlen, während die regelbare Lautstärke des hörbaren Tons im wesentlichen auf null gehalten wird, wenn der erhöhte Zählwert kleiner als ein erster bestimmter Zählwert ist.

8. Funkübertragungsgerät nach Anspruch 7, wobei die Regeleinrichtung als Antwort auf das empfangene Signal und das Stillbetriebssignal die Tonerzeugungseinrichtung veranlaßt, den hörbaren Ton mit einer kleinen Lautstärke zu erzeugen, wenn der erhöhte Zählwert nicht kleiner als der erste bestimmte Zählwert und kleiner als ein zweiter bestimmter Zählwert ist, der größer als der erste bestimmte Zählwert ist, die Regeleinrichtung als Antwort auf das empfangene Signal und das Stillbetriebssignal die Tonerzeugungseinrichtung veranlaßt, den hörbaren Ton mit einer normalen Lautstärke zu erzeugen, die größer als die kleine Lautstärke ist, wenn der erhöhte Zählwert nicht kleiner als der zweite bestimmte Zählwert und kleiner als ein dritter bestimmter Zählwert ist, der größer als der zweite bestimmte Zählwert ist.

9. Funkübertragungsgerät nach Anspruch 8, wobei die Regeleinrichtung als Antwort auf das empfangene Signal und das Stillbetriebssignal die Tonerzeugungseinrichtung veranlaßt, den hörbaren Ton mit einer Lautstärke zu erzeugen, die größer als die normale Lautstärke ist, wenn der erhöhte Zählwert nicht kleiner als der dritte bestimmte Zählwert ist.

## Revendications

1. Appareil de communication radio qui comporte un moyen de réception pour effectuer une opération de réception consistant à recevoir sélectivement un signal d'appel spécifique audit appareil, ledit moyen de réception produisant un signal reçu chaque fois que ledit moyen de réception reçoit ledit signal d'appel, dans lequel l'amélioration comporte:
un moyen de comptage connecté audit moyen de réception et donné un compte initial pour compter ledit compte initial jusqu'à un compte augmenté un à un en réponse audit signal reçu pour produire un signal de comptage représentatif dudit compte augmenté;
un moyen de génération de tonalité pour générer une tonalité audible au volume commandable; et
un moyen de commande connecté audit moyen de comptage et audit moyen de génération de tonalité pour commander ledit volume commandable en réponse audit signal de comptage.

2. Appareil de communication radio selon la revendication 1, comprenant en outre un commutateur de remise à zéro connecté audit moyen de commande pour produire un signal de remise à zéro, dans lequel ledit moyen de commande est sensible audit signal de remise à zéro pour faire en sorte que ledit moyen de génération de tonalité arrête la génération de ladite tonalité audible.

3. Appareil de communication radio selon la revendication 2, dans lequel ledit appareil comprend en outre un moyen d'initialisation connecté audit commutateur de remise à zéro et audit moyen de comptage pour initialiser le compte augmenté dans ledit moyen de comptage audit compte initial en réponse audit signal de remise à zéro.

4. Appareil de communication radio selon la revendication 1, dans lequel ledit moyen de commande est sensible audit signal reçu pour faire en sorte que ledit moyen de génération de tonalité génère ladite tonalité audible avec un volume normal quand ledit compte augmenté est inférieur à un premier compte prédéterminé, ledit moyen de commande étant sensible audit signal reçu pour faire en sorte que ledit moyen de génération de tonalité génère ladite tonalité audible avec un volume élevé supérieur audit volume normal quand ledit compte augmenté n'est pas inférieur audit premier compte prédéterminé.

5. Appareil de communication radio selon la revendication 1, comprenant un commutateur de mode de volume connecté audit moyen de commande pour produire un signal de mode de volume indicatif d'un volume.normal et d'un volume faible inférieur audit volume normal, dans lequel ledit mode de commande est sensible audit signal reçu et au signal de mode de volume indicatif dudit volume faible pour faire en sorte que ledit moyen de génération de tonalité génère la tonalité audible avec ledit volume faible si ledit compte augmenté est inférieur à un premier compte prédéterminé, ledit mode de commande étant sensible audit signal reçu et au signal de mode de volume indicatif dudit volume faible pour faire en sorte que ledit moyen de génération de tonalité génère la tonalité audible avec ledit volume normal si ledit compte augmenté n'est pas inférieur audit premier compte prédéterminé et est inférieur à un second compte prédéterminé supérieur audit premier compte prédéterminé.

6. Appareil de communication radio selon la revendication 5, dans lequel ledit mode de commande est sensible audit signal reçu et au signal de mode de volume indicatif dudit volume faible pour faire en sorte que ledit moyen de génération de tonalité génère la tonalité audible avec un volume fort supérieur audit volume normal si ledit compte augmenté n'est pas inférieur audit second compte prédéterminé.

7. Appareil de communication radio selon la revendication 1, comprenant en outre un moyen électroluminescent connecté audit moyen de commande pour émettre de la lumière visible et un commutateur de mode silencieux connecté audit moyen de commande pour produire un signal de mode silencieux indicatif du silence, dans lequel ledit moyen de commande est sensible audit signal reçu et audit signal de mode silencieux pour faire en sorte que ledit moyen électroluminescent émette ladite lumière visible tout en maintenant le volume commandable de ladite tonalité audible en grande partie à zéro si ledit compte augmenté est inférieur à un premier compte prédéterminé.

8. Appareil de communication radio selon la revendication 7, dans lequel ledit mode de commande est sensible audit signal reçu et au signal de mode silencieux pour faire en sorte que ledit moyen de génération de tonalité génère la tonalité audible avec un volume faible si ledit compte augmenté n'est pas inférieur audit premier compte prédéterminé et est inférieur à un second compte prédéterminé supérieur audit premier compte prédéterminé, ledit moyen de commande étant sensible audit signal reçu et audit signal de mode silencieux pour faire en sorte que ledit moyen de génération de tonalité génère la tonalité audible avec un volume normal supérieur audit volume faible si ledit compte augmenté n'est pas inférieur audit second compte prédéterminé et est inférieur à un troisième compte prédéterminé supérieur audit second compte prédéterminé.

9. Appareil de communication radio selon la revendication 8, dans lequel ledit mode de commande est sensible audit signal reçu et audit signal de mode silencieux pour faire en sorte que ledit moyen de génération de tonalité génère la tonalité audible avec un volume fort supérieur audit volume normal si ledit compte augmenté n'est pas inférieur audit troisième compte prédéterminé.
